# EUROPEAN PATENT APPLICATION

(11) **EP 4 750 114 A1**
(43) Date of publication of application: **27.05.2026**
(21) Application number: 24844224.6
(22) Date of filing: 28.02.2024
(51) Int. Cl.: H04W 12/06, H04W 24/08, H04L 9/40, H04L 67/10, H04W 24/10, H04L 67/104

(54) **NETWORK COVERAGE VERIFICATION METHOD, AND COMMUNICATION APPARATUS AND STORAGE MEDIUM**

(30) Priority: 25.07.2023 CN 202310927683
(71) Applicant: ZTE Corporation, Shenzhen, Guangdong 518057 (CN)
(72) Inventor: SONG, Anyang, Shenzhen, Guangdong 518057 (CN); LV, Xingzai, Shenzhen, Guangdong 518057 (CN); XU, Jing, Shenzhen, Guangdong 518057 (CN); RUI, Hua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/079104
(87) International publication number: WO 2025/020526

(57) **Abstract**

Provided in the embodiments of the present disclosure are a network coverage verification method, and a communication apparatus and a storage medium. The network coverage verification method comprises: a first node sending a verification request to a second node in a communication system, wherein the verification request is used for requesting to verify whether the network coverage information of the second node is valid, and receiving verification information of the second node that is sent by a fourth node, and sending the verification information to a third node.

## Description

The present disclosure claims the priority of the Chinese patent application No. 202310927683.4, filed on July 25, 2023, the entire content of which is incorporated into the present disclosure by reference.

### TECHNICAL FIELD

The present disclosure relates to the field of communication technologies, particularly to network coverage verification methods, a communication apparatus and a storage medium.

### BACKGROUND

With the development of communication technologies, the demand for network infrastructure deployment is also increasing. To avoid the repetitive construction of network infrastructures, so as to reduce construction costs and improve construction efficiency, operators usually collaborate to construct and share a network for joint networking. In the co-constructed and shared network, there is an issue of the coverage verification of base stations.

### SUMMARY

The present disclosure has the following technical solutions.

In a first aspect, a network coverage verification method is provided, which is applied to a first node, and the method includes:
sending a verification request to a second node in the communication system; where the verification request is used to request a verification of whether network coverage information of the second node is valid;
receiving verification information of the second node sent from a fourth node; and
sending the verification information to a third node.

In a second aspect, a network coverage verification method is provided, which is applied to a second node, and the method includes:
receiving a verification request sent from a first node; where the verification request is used to request a verification of whether network coverage information of the second node is valid; and
sending a beacon signal to a fourth node, in response to the verification request.

In a third aspect, a network coverage verification method is provided, which is applied to a third node, and the method includes:
sending a verification initiation instruction to a first node; where the verification initiation instruction is used to indicate the first node to send a verification request, and the verification request is used to request a verification of whether network coverage information of a second node is valid;
receiving verification information sent from the first node; and
determining whether the network coverage information of the second node is valid, according to the verification information.

In a fourth aspect, a network coverage verification method is provided, which is applied to a fourth node, and the method includes:
receiving a beacon signal sent from a second node; and
sending verification information to a first node based on the beacon signal; where the verification information includes a measurement parameter of the beacon signal.

In a fifth aspect, a communication apparatus is provided, which is located at a first node. The communication apparatus includes:
a sending unit, configured to send a verification request to a second node in the communication system; where the verification request is used to request a verification of whether network coverage information of the second node is valid;
a receiving unit, configured to receive verification information of the second node sent from a fourth node; and
the sending unit, further configured to send the verification information to a third node.

In a sixth aspect, a communication apparatus is provided, which is located at a second node. The communication apparatus includes:
a receiving unit, configured to receive a verification request sent from a first node; where the verification request is used to request a verification of whether network coverage information of the second node is valid; and
a sending unit, configured to send a beacon signal to a fourth node, in response to the verification request.

In a seventh aspect, a communication apparatus is provided, which is located at a third node. The communication apparatus includes:
a sending unit, configured to send a verification initiation instruction to a first node; where the verification initiation instruction is used to indicate the first node to send a verification request, and the verification request is used to request a verification of whether network coverage information of a second node is valid;
a receiving unit, configured to receive verification information sent from the first node; and
a processing unit, configured to determine whether the network coverage information of the second node is valid, according to the verification information.

In an eighth aspect, a communication apparatus is provided, which is applied to a fourth node. The communication apparatus includes:
a receiving unit, configured to receive a beacon signal sent from a second node; and
a sending unit, configured to send verification information to a first node based on the beacon signal; where the verification information includes a measurement parameter of the beacon signal.

In a ninth aspect, a communication apparatus is provided, including a processor and a memory; the memory has stored instructions executable by the processor; and the processor is configured to enable the communication apparatus to implement any one of the methods provided in the above first aspect to fourth aspect, when executing the instructions.

In a tenth aspect, a computer readable storage medium is provided, the computer readable storage medium stores computer instructions, and when the computer instructions are executed on a computer, the computer performs any one of the methods provided in the above first aspect to fourth aspect.

In an eleventh aspect, a computer program product containing computer instructions is provided, and when the computer instructions are executed on a computer, the computer performs any one of the methods provided in the above first aspect to fourth aspect.

### BRIEF DESCRIPTION OF THE DRAWINGS

The drawings are provided to further understand the technical solutions of the present disclosure and form a part of the specification, and are used to explain the technical solutions of the present disclosure together with the embodiments of the present disclosure and do not constitute a limitation on the technical solutions of the present disclosure.
FIG. 1 is a schematic diagram of an architecture of a communication system provided in the embodiments of the present disclosure.
FIG. 2 is a schematic flowchart of a blockchain system provided in the embodiments of the present disclosure.
FIG. 3 is a schematic flowchart of a network coverage verification method provided in the embodiments of the present disclosure.
FIG. 4 is a schematic diagram of a communication node provided in the embodiments of the present disclosure.
FIG. 5 is a schematic flowchart of another network coverage verification method provided in the embodiments of the present disclosure.
FIG. 6 is a schematic flowchart of yet another network coverage verification method provided in the embodiments of the present disclosure.
FIG. 7 is a schematic diagram of components of a communication apparatus provided in the embodiments of the present disclosure.
FIG. 8 is a schematic diagram of components of another communication apparatus provided in the embodiments of the present disclosure.
FIG. 9 is a schematic diagram of components of yet another communication apparatus provided in the embodiments of the present disclosure.
FIG. 10 is a schematic diagram of components of yet another communication apparatus provided in the embodiments of the present disclosure.
FIG. 11 is a structural schematic diagram of a communication apparatus provided in the embodiments of the present disclosure.

### DETAILED DESCRIPTION

The following will describe clearly and completely the technical solutions in the embodiments of the present disclosure, in conjunction with the drawings in the embodiments of the present disclosure, and obviously, the described embodiments are only some of the embodiments of the present disclosure, not all of the embodiments. All other embodiments obtained by those ordinary skilled in the art without making creative efforts based on the embodiments in the present disclosure fall within the scope of protection of the present disclosure.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent: only A, only B, and A and B. Additionally, "at least one" means one or more, and "multiple/plurality of" means two or more. Words such as "first" and "second", etc., do not limit the number or execution order, and the words such as "first" and "second", etc., do not necessarily limit different items.

It should be noted that in the present disclosure, terms such as "exemplary (exemplarily)" or "for example (such as, e.g.)" are used to represent examples, illustrations, or descriptions. Any embodiment or design solution described with "exemplary (exemplarily)" or "for example (such as, e.g.)" in the present disclosure should not be interpreted as being more preferred or advantageous than other embodiments or design solutions. Specifically, the use of the terms such as "exemplary (exemplarily)" or "for example (such as, e.g.)", etc., is intended to present related concepts in a specific manner.

The relevant technical terms involved in the present disclosure will be first explained and described here.

The blockchain technology is the core supporting technology for digital cryptocurrency systems represented by Bitcoin. The blockchain is characterized by decentralization, flexibility, and security.

The blockchain usually includes multiple blockchain nodes, and all the blockchain nodes in the blockchain jointly maintain data written in a blockchain ledger. Since writing/deleting/modifying data in a blockchain node requires consensus from all blockchains, the blockchain is a distributed database that is very difficult to tamper with.

Generally speaking, the blockchain has at least the following three features: tamper-proof, decentralization, and smart contracts.

The consensus algorithm is an algorithmic mechanism that enables each node in the blockchain system to reach a consensus. Since the blockchain is a distributed system, a consensus among the nodes in the system is required, so as to determine which node will perform the writing of a new block.

To improve the accuracy of the network coverage verification, the embodiments of the present disclosure provides a network coverage detection method, which may include that: a third node sends a verification initiation instruction to a first node; the first node sends a verification request to a second node in the communication system, the verification request being used to request a verification of whether network coverage information of the second node is valid; the first node receives verification information of the second node sent from a fourth node, and sends the verification information to the third node, and the third node determines whether the network coverage information of the second node is valid according to the verification information. In this way, in the embodiments of the present disclosure, the method may be combined with the blockchain technology, to improve the authenticity and effectiveness of the verification of network coverage information of each node.

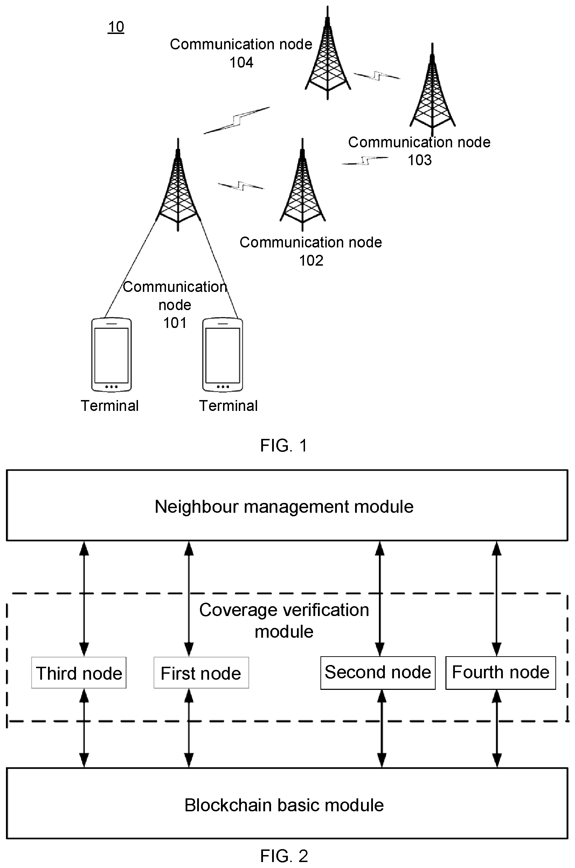

The method provided in the embodiments of the present disclosure may be applied to various communication systems. For example, the communication system may be a long term evolution (LTE) system or a 5th generation (5G) communication system, a Wi-Fi (wireless fidelity) system, a 3rd generation partnership project (3GPP)-related communication system, a future evolutional communication system (e.g., the 6th generation (6G) communication system, etc.), or a system integrated with multiple systems, etc., which is not limited thereto. The following takes a communication system 10 shown in FIG. 1 as an example to describe the method provided in the embodiments of the present disclosure. FIG. 1 is only a schematic diagram, and does not constitute a limitation on applicable scenarios of the technical solutions provided in the present disclosure.

As shown in FIG. 1, it is a schematic diagram of an architecture of a communication system 10 provided in the embodiments of the present disclosure. In FIG. 1, the communication system 10 may include multiple communication nodes, for example, a communication node 101, a communication node 102, a communication node 103 and a communication node 104 in FIG. 1.

The communication nodes in FIG. 1 may provide wireless access services to terminals. For example, each communication node corresponds to a service coverage range, and a terminal entering the region may communicate with the communication node, to receive a wireless access service provided by the communication node. In some embodiments, the service coverage range may include one or more cells. For example, the service coverage range corresponding to the communication node 101 includes a first cell and a second cell, a first terminal accesses the communication node 101 through the first cell, and a second terminal accesses the communication node 101 through the second cell.

The communication node provided in the embodiments of the present disclosure may be any device with a wireless transceiver function. For example, it is a base station or an evolutional base station (evolutional node B, eNB or eNodeB) in long term evolution (LTE), long term evolution advanced (LTEA), a base station device in a 5G network, or a base station in a future communication system, etc.; the base stations may include various macro base stations, micro base stations, femtocells, wireless remotes, reconfigurable intelligent surfaces (RISs), routers, wireless fidelity (WIFI) devices, or various primary cell and secondary cell access network devices, etc.

The terminal in the embodiments of the present disclosure may be any device with a wireless transceiver function. For example, the terminal is a handheld device (such as mobile phone or tablet computer, etc.) with a wireless communication function, a vehicle-mounted device, a wearable device, a terminal or computing device in the internet of things (IoT) system, etc. The terminal may also be referred to as a terminal device, or user equipment (UE), which is not limited herein.

It can be understood that the system architecture shown in FIG. 1 does not constitute a limitation on the embodiments of the present disclosure, and it may include more or fewer components than those shown in the figure, or combine some components, or have different component deployments.

In some embodiments, the embodiments of the present disclosure also provides a blockchain system, as shown in FIG. 2, and the blockchain system may include a coverage verification module, a neighbour management module and a blockchain basic module.

The blockchain system also includes a blockchain network, including a plurality of blockchain nodes, and each node or device in the communication system 10 shown in FIG. 1 may be a blockchain node in the blockchain network.

The blockchain node may release information to the blockchain network, and taking the blockchain node as a base station as an example, the base station, as a infrastructure of the communication network, has a fixed geographical position and meanwhile provides basic resources such as computing, storage, and networking, etc., and the network coverage range of the base station refers to a coverage range of the network provided by the base station. In some embodiments, the blockchain node may release a proof request to the blockchain network, for full-network broadcasting for the blockchain network, and the proof request includes network coverage information of the base station and may also carry information such as a geographical position of the blockchain, etc., to verify its own network coverage information through the broadcasting of the proof request.

The embodiments of the present disclosure may utilize a consensus (proof of coverage, PoC) mechanism of the blockchain, to verify the network coverage information of a node through query (or challenge) and proof processes. During the verification, the blockchain nodes that need to be in the blockchain network may be a challenger, a challengee, a consensus group, and a witness during the verification. In the following, the first node is taken as the challenger during the verification, the second node is taken as the challengee during the verification, the third node is taken as used as the consensus group during the verification, and the fourth node is taken as the witness during the verification, for illustration.

The first node, the second node, the third node and the fourth node are the blockchain nodes in the blockchain network. Moreover, taking the communication system 10 in FIG. 1 as an example, the first node, the second node, the third node and the fourth node may be four communication nodes in the communication system 10, for example, the communication node 101, the communication node 102, the communication node 103 and the communication node 104. In addition, the coverage verification module is configured to implement the network coverage verification method provided in the embodiments of the present disclosure, and the verification of the network coverage information is completed through different nodes in the blockchain, to obtain the verification result. In some embodiments, the coverage verification module may transmit information generated during the verification to the blockchain basic module. For example, the information may include at least one of an identifier of the verification, a verification result, verification completion time, an identifier of the first node, an identifier of the second node, an identifier of the fourth node, position information of the fourth node, a number of fourth nodes that meet a verification requirement, and a measurement parameter obtained by measuring a beacon signal of the second node.

The embodiments of the present disclosure may utilize the consensus (proof of coverage, PoC) mechanism of the blockchain, to verify the network coverage information of a node through query (or challenge) and proof processes. During the verification, the first node is the challenger during the verification, the second node is the challengee during the verification, the third node is the consensus group during the verification, and the fourth node is the witness during the verification.

The neighbour management module is configured to implement an automatic neighbour relationship processing function. It may implement automatic discovery, identification and maintenance of the neighbour relationship of each cell, thereby reducing the burden of manual maintenance of the base station neighbour list. Exemplarily, based on the automatic neighbour relationship processing function, automatic discovery and addition of neighbour(s), identification and deletion of mismatched redundant neighbour(s), and optimization of neighbour attribute(s), etc., may be implemented. A neighbour relation table (NRT) of each cell may be maintained, in which each neighbour is identified by a target cell identity (TCI). This module may implement the discovery and maintenance of neighbour relationships based on the measurement report of each base station, thereby implementing the automatic management of neighbour relationships. In addition, this module may also provide a basis for judging the verification result, for the verification of the network coverage information in the embodiments of the present disclosure.

The blockchain basic module is used to record a data content generated during the challenge. The blockchain basic module may control the security and trustworthiness during the verification of the network coverage information, thereby enabling the relevant information to be tamper-proof. The blockchain basic module may also control the frequency of the verification of the network coverage information based on blockchain block generation time. The blockchain basic module may record information generated during the verification. For example, the information may include at least one of an identifier of the verification, a verification result, verification completion time, an identifier of the first node, an identifier of the second node, an identifier of the fourth node, position information of the fourth node, a number of fourth nodes that meet a verification requirement, and a measurement parameter obtained by measuring a beacon signal of the second node.

The following, in conjunction with the drawings of the specification, provides an example introduction to the methods provided in the disclosure.

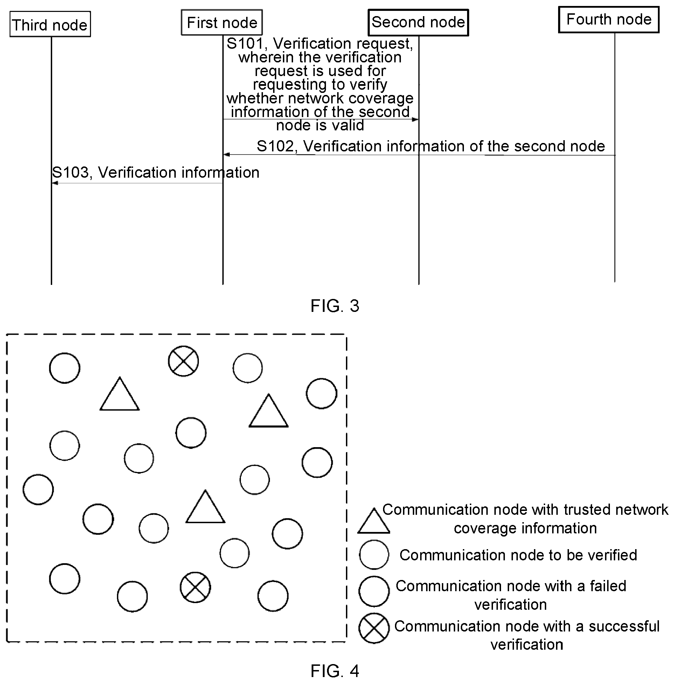

The embodiments of the present disclosure provide a network coverage verification method, as shown in FIG. 3, and the method includes the following steps.

S101: A first node sends a verification request to a second node in a communication system, where the verification request is used to request a verification of whether network coverage information of the second node is valid.

Correspondingly, the second node receives the verification request sent from the first node.

In some embodiments, the first node is a communication node with trusted network coverage information in the communication system. Exemplarily, as shown in FIG. 4, communication nodes in the communication system may include communication node(s) with trusted network coverage information, communication node(s) to be verified, communication node(s) with a failed verification, and communication node(s) with a successful verification.

It should be noted that network coverage information of the first node does not need to be verified, and exemplarily, in practical applications, this first node may be a base station with long-term stable operations, a base station with a trusted deployed position, a publicly recognized trusted base station, a trusted base station set by a specific operator, etc.

In addition, the communication node to be verified is a communication node in the communication system without a verification of network coverage information, the communication node with the failed verification is a communication node whose previous verification result of network coverage information was invalid, and the communication node with the successful verification is a communication node whose previous verification result of network coverage information was valid.

In some embodiments, the first node may determine a second node among a plurality of communication nodes in the communication system and send a verification request to the second node.

The verification request may include at least one of an identifier of the first node, a digital digest of a public key of the first node, and a digital digest of the verification request.

The digital digest may convert a message with any length into a short message with a fixed length, which is a ciphertext with a fixed length (for example, 128 bits) obtained through "digesting" a to-be-encrypted plaintext by using a one-way Hash function, and is also referred to as a digital fingerprint. In some embodiments, the first node may perform digital encryption on the public key of the first node based on a hash algorithm to obtain a digital digest of the public key of the first node, and may also perform digital encryption on the verification request to obtain a digital digest of the verification request.

In addition, the identifier of the first node mentioned above is used to uniquely identify the first node. Exemplarily, the identifier of the first node may be an IP address, a name, a number in the communication system, an identity credential of the first node, or other information that may represent the first node.

In some embodiments, when the network coverage information of the second node needs to be verified, the first node may generate a key for the verification, including the public key of the first node and a private key of the first node.

In some embodiments, the above-mentioned verification request may also be encrypted by the public key of the first node and/or a public key of the second node. Exemplarily, the first node may encrypt the verification request by the public key of the first node first, and then by the public key of the second node.

It should be understood that the second node may generate a key, including the public key of the second node and a private key of the second node. Furthermore, before the first node sends the verification request to the second node, it may acquire the public key of the second node first.

Exemplarily, the above-mentioned verification request may also be referred to as a challenge data packet, that is, the challenger (the first node), in response to receiving a verification initiation instruction, may send an encrypted challenge data packet to the challengee (the second node). Moreover, the challenger (the first node) and the challengee (the second node) may also implement the data transmission through a message mechanism of the blockchain, such as peer-to-peer (P2P) transmission mode, to improve data security.

In some embodiments, the second node may also decrypt the received verification request by the private key of the second node and/or the private key of the first node.

In an example, the second node decrypts the verification request by the private key of the second node.

In another example, the second node may decrypt the verification request by the private key of the second node first, and then by the private key of the first node.

In some embodiments, the second node is a base station that currently needs the verification of whether the network coverage information is valid. In an example, the second node may be a communication node to be verified, a communication node with a failed verification, and a communication node with a successful verification, in the communication system.

Thus, the first node may determine a second node from the communication node to be verified, the communication node with the failed verification, and the communication node with the successful verification, in the communication system, and send a verification request to the second node.

In some embodiments, the first node may first acquire verification priority of each communication node among the communication node to be verified, the communication node with the failed verification and the communication node with the successful verification, and then determine the second node according to the verification priority of each communication node.

In an example, the verification priority of the communication node to be verified is higher than that of the communication node with the failed verification, and the verification priority of the communication node with the failed verification is higher than that of the communication node with the successful verification. That is, the first node is more likely to select the communication node to be verified as the second node than the communication node with the failed verification, and more likely to select the communication node with the failed verification as the second node than the communication node with the successful verification.

In some embodiments, the verification priority of the communication node with the successful verification is positively proportional to interval time since a last successful verification of the communication node.

It should be noted that after the verification of the network coverage information of the communication node is successful, the longer the interval time since this successful verification of the communication node, the lower the trustworthiness of its verification result, that is, the lower the trustworthiness of the network coverage information of the communication node, and thus, the communication node needs a verification of the network coverage information again. Therefore, the verification priority of the communication node with the successful verification is positively proportional to interval time since a last successful verification of the communication node.

In some embodiments, the verification priority of the communication node with the failed verification is positively proportional to interval time since a last successful verification of the communication node. Similarly, after the verification of the network coverage information of the communication node fails, the longer the interval time since the failed verification of the communication node, the lower the trustworthiness of its verification result, that is, the more the communication node needs a verification of the network coverage information again.

In some embodiments, each communication node in the blockchain network may also have trustworthiness, and the trustworthiness of the communication node is used to represent the possibility of the network coverage information of the communication node being valid. The higher the trustworthiness of the communication node, the lower the verification priority. It should be understood that the trustworthiness of the communication node to be verified is lower than that of the communication node with the failed verification, and the trustworthiness of the communication node with the failed verification is lower than that of the communication node with the successful verification, and, the trustworthiness of each communication node is also negatively proportional to interval time since a last successful verification of the communication node. Exemplarily, a node management function module may be set in the blockchain system, to dynamically maintain the trustworthiness of each communication node, thereby enabling to initiate periodic verification procedures for network coverage information of communication nodes.

It should be noted that in the blockchain network, the communication node to be verified selected based on the communication node with trusted network coverage information, may first be verified, and then, the network coverage situation of other communication nodes may be further verified through the query (or challenge) and proof mechanisms, which is repeated and iterated, so as to implement verifications of network coverage information of the respective nodes among the communication node to be verified, the communication node with the failed verification and the communication node with the successful verification. Moreover, for the node that is verified for a long time, it may be verified again. In this way, the dynamic maintenance for the verification and trustworthiness of each communication node in the communication system may be implemented. Furthermore, for a small base station in the campus network, real and valid network coverage information may be provided.

S102: A fourth node sends verification information of the second node to the first node.

Correspondingly, the first node receives the verification information of the second node sent from the fourth node.

In some embodiments, the second node may send a beacon signal to the fourth node in response to the verification request. Correspondingly, the fourth node receives the beacon signal sent from the second node. Furthermore, the fourth node may send the verification information of the second node to the first node.

In some embodiments, the fourth node may be a communication node with trusted network coverage information in the communication system, or, the fourth node may also be a communication node with a successful verification of network coverage information in the communication system. The fourth node may be referred to as a witness in the challenge procedure, that is, it may witness or verify this challenge process (the verification process of network coverage information) based on the request of the challengee (the second node).

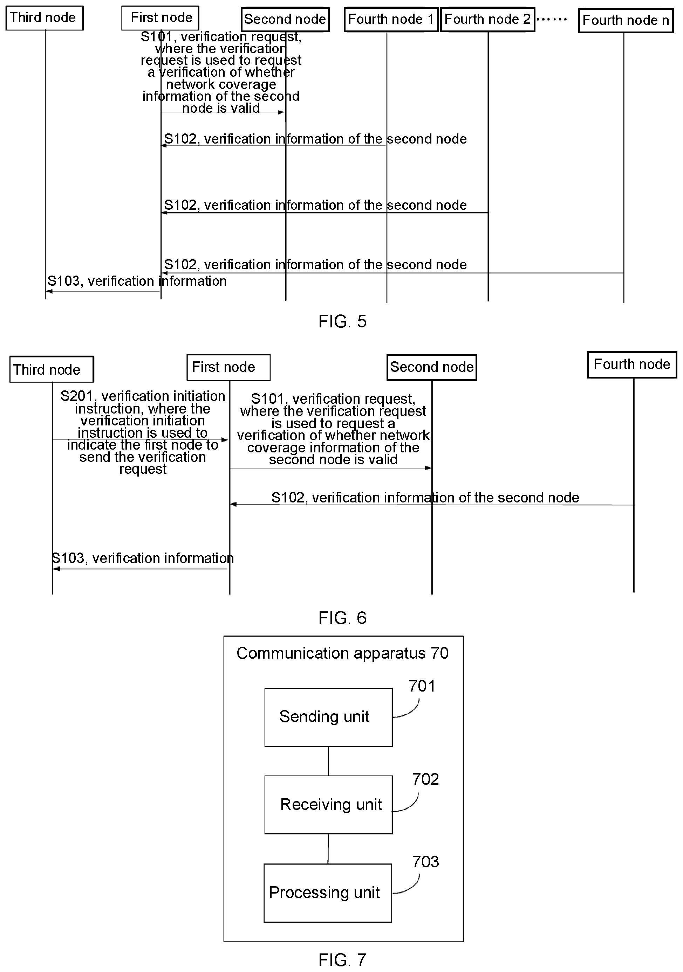

In some embodiments, the number of fourth nodes may be multiple. That is, the first node may receive verification information sent from a plurality of fourth nodes. As shown in FIG. 5, the fourth nodes may include a fourth node 1, a fourth node 2, ..., a fourth node n, where n is a positive integer. The second node may send a beacon signal to the fourth node 1, the fourth node 2, ..., the fourth node n, respectively. Furthermore, the first node may receive the verification information sent from the fourth node 1, the fourth node 2, ..., the fourth node n, respectively, where n is a positive integer. In some embodiments, the first node and the fourth nodes may also implement data transmissions through the message mechanism of the blockchain, and for example, transmit the verification information in the P2P transmission mode, thereby improving data security.

In some embodiments, the fourth node may be a communication node in the neighbour relation list of the second node, that is, the fourth node belongs to a target cell in the neighbours of the second node, and exemplarily, the fourth node may be determined based on TCls of the neighbours of the second node.

In an example, after receiving the verification request sent from the first node, the second node may decrypt based on the private key of the first node and/or the private key of the second node, and in response to the verification request, send a beacon signal to the communication node (the fourth node) in the neighbour relation list, and furthermore, the fourth node may receive the beacon signal, and measure the beacon signal to obtain a measurement parameter. In some embodiments, the second node may send the beacon signal by sending an air interface message.

It should be understood that in a case where the first node encrypts the verification request by the public key of the first node first and then by the public key of the second node, the second node, in response to receiving the verification request, may decrypt by the private key of the second node first and then by the private key of the first node.

In some embodiments, the verification information may include a measurement parameter obtained by measuring a beacon signal sent from the second node.

In some embodiments, the measurement parameter includes at least one of: reference signal receiving power (RSRP), received signal strength indicator (reference signal strength indicator, RSSI), signal to interference plus noise ratio (SINR), throughput, and quality of experience (QoE).

In some embodiments, the verification information may also include at least one of an identifier of the fourth node, position information of the fourth node, and a digital digest of the verification information.

The fourth node may perform digital encryption on the verification information based on the hash algorithm, to obtain the digital digest of the verification information. In addition, the identifier of the fourth node is used to uniquely identify the fourth node. Exemplarily, the identifier of the fourth node may be an IP address, a name, a number in the communication system, an identity credential of the fourth node, or other information that may represent the fourth node.

In some embodiments, the fourth node may encrypt the verification information by the public key of the first node. It should be understood that the fourth node may receive the public key of the first node sent from the first node, and then, in a case of sending the verification information, may encrypt the verification information by the public key of the first node.

S103: The first node sends the verification information to a third node.

Correspondingly, the third node may receive the verification information sent from the first node.

In some embodiments, the first node may decrypt the verification information sent from at least one fourth node, by the private key of the first node. Furthermore, the verification information sent from at least one fourth node that has been decrypted, and the private key of the first node are packaged to obtain a first data packet, and then the first data packet is sent to the third node.

In some embodiments, the third node may receive the first data packet sent from the first node, and the first data packet includes the verification information and the private key of the first node. Furthermore, the third node may decrypt the verification information by the private key of the first node, to obtain the decrypted verification information.

In some embodiments, the verification information includes the measurement parameter obtained by measuring the beacon signal of the second node by the fourth node. The measurement parameter includes at least one of: RSRP, RSSI, SINR, throughput, and QoE.

In some embodiments, the verification information may also include at least one of an identifier of the fourth node, position information of the fourth node, and a digital digest of the verification information.

In some embodiments, the third node may also determine whether the network coverage information of the second node is valid, according to the verification information.

In some embodiments, the third node may determine that the network coverage information of the second node is valid, in a case where the verification information meets a preset condition. Furthermore, the third node may also determine the second node as a communication node with a successful verification.

Alternatively, the third node may determine that the network coverage information of the second node is invalid, in a case where the verification information does not meet the preset condition. Furthermore, the third node may also determine the second node as a communication node with a failed verification.

In some embodiments, the preset condition is determined based on a network coverage quality parameter and/or a network coverage range parameter.

The network coverage quality parameter includes a distance parameter between the second node and a fourth node, and a measurement parameter obtained by measuring a beacon signal of the second node by a fourth node. The network coverage range parameter includes a number of fourth nodes belonging to a target cell in neighbours of the second node. Moreover, the measurement parameter includes at least one of: RSRP, RSSI, SINR, throughput, and QoE.

Exemplarily, the preset condition may be determined by one parameter or a combination of multiple parameters among the network coverage quality parameter and the network coverage range parameter mentioned above. For example, the preset condition may be that the distance between the second node and the fourth node is less than or equal to a preset distance threshold, or the number of fourth nodes belonging to the target cell in the neighbours of the second node is greater than or equal to 1, etc., and the preset condition is determined based on one parameter among the network coverage quality parameter or the network coverage range parameter mentioned above. Alternatively, the preset condition may be that the number of fourth nodes belonging to the target cell in the neighbours of the second nodee is greater than or equal to 1, and the received measurement value RSRP is greater than a preset RSRP threshold, etc., and the preset condition is determined based on a combination of multiple parameters among the network coverage quality parameter or the network coverage range parameter mentioned above.

In addition, the judgment of the verification result may also be achieved through other possible implementations, such as a multi-parameter comprehensive judgment by an artificial intelligence algorithm, etc.

In an example, in practical applications, the consensus group (i.e., the third node) may select a trusted base station set by a specific operator as an example, that is, the third node may select a trusted base station set by a specific operator as the challenger (i.e., the first node), and the first node further sends the verification request to the second node. In this example, a relevant base station of a specific operator with a successful verification of network coverage information may also be taken as the witnesses (i.e., the fourth node), whose verification is successful in a case where there is one fourth node in TCls of the neighbour list of the second node.

In another example, the consensus group (i.e., the third node) may select a trusted base station set by a specific operator as an example, that is, the third node may select a trusted base station set by a specific operator as the challenger (i.e., the first node), and the first node then sends the verification request to the second node. In this example, a relevant base station of a non-specific operator with a successful verification of network coverage information may be taken as the witness (i.e., the fourth node). Thus, the range of the coverage verification may be expanded by the relevant base station of the non-specific operator.

Furthermore, the verification fails, in a case where there are not enough nearby base stations with a successful verification or there are base stations with incorrect position information, as the witnesses (i.e., the fourth node). In this case, the number of fourth nodes that meet the verification requirement may be 0.

In some embodiments, the third node may record the verification result of the second node in a new block created by the third node in the blockchain. In addition, the third node may record the verification completion time, verification initiation time, or other possible time points, in the new block.

It should be noted that in a case where the verification is completed, the verification result of the second node may be "uploaded" to the chain, that is, recorded in the new block created by the third node in the blockchain. In a case of the successful verification or the failed verification, its verification result needs to be "uploaded" to the chain. In addition, the content "uploaded" to the chain may also include information generated during the verification, such as the identifier of the verification, the verification completion time, the identifier of the first node, the identifier of the second node, the identifier of the fourth node, the position information of the fourth node, the number of fourth nodes that meet the verification requirement, and the measurement parameter obtained by measuring the beacon signal of the second node, etc.

In some embodiments, in a case of the successful verification, each node participating in the verification may receive an incentive reward, and the incentive reward may be allocated based on a preset incentive proportion. For example, the first node may obtain 1% of the incentive reward, the second node may obtain 12% of the incentive reward, the third node may obtain 30% of the incentive reward, the fourth node may obtain 6% of the incentive reward, and other modules or nodes participating in this verification may obtain the remaining 51% of the incentive reward.

In some embodiments, in a case of the failed verification, each node participating in the verification except the second node may receive an incentive reward, and the incentive reward may be allocated based on a preset incentive proportion.

In some embodiments, the fourth node may also record the preset incentive proportion in the above-mentioned new block.

Based on the methods provided in the embodiments of the present disclosure, the network coverage verification may be performed on the nodes in the co-constructed and shared network, through the challenge verification in the blockchain, in conjunction with the blockchain technology. In this way, the authenticity and effectiveness of the verification of network coverage information of each node may be improved. Furthermore, the present disclosure does not require any other external information during the verification for the verification information, which may reduce the complexity and overhead required for the network coverage verification.

Furthermore, in the verification judgment for the verification information in the present disclosure, the neighbour relation may be maintained based on the cell of the challengee and the measurement parameter of the beacon signal of the challengee may be taken as the basis for judgment, thereby reducing the complexity of the network coverage verification.

In some embodiments, as shown in FIG. 6, before the step S101, the network coverage verification method may also include the following step.

S201: The third node sends a verification initiation instruction to the first node, where the verification initiation instruction is used to indicate the first node to send the verification request.

Correspondingly, the first node may receive the verification initiation instruction sent from the third node.

In some embodiments, the third node may also be a communication node with trusted network coverage information in the communication system. Moreover, the third node may determine the first node among communication nodes with trusted network coverage information in the communication system.

It should be noted that the embodiments of the present disclosure may utilize the consensus mechanism of the blockchain, to verify network coverage information of a node through the inquiry (or challenge) and proof processes. The third node mentioned above may also be referred to as a consensus group of the processes, and it may select a first node, that is, the challenger, in the communication system, and send a verification initiation instruction to the first node, to initiate the inquiry (or challenge) and proof procedures for network coverage information of the node in the blockchain.

In a case where it is necessary to initiate the verification of the network coverage, a third node may be selected from communication nodes with trusted network coverage information in the communication system, in a random selection mode. For example, based on the challenge mechanism of the blockchain network, the third node may also be referred to as a consensus group, and the third node during each verification of the network coverage may be different.

In some embodiments, the third node may determine a first node among the communication nodes with trusted network coverage information in the communication system, and then send a verification initiation instruction to the first node, to initiate the verification of the network coverage information of the communication node in the communication system.

In some embodiments, the third node may also create an identifier of the verification. Correspondingly, the verification initiation instruction may also include the identifier of the verification.

The identifier of the verification is used to uniquely identify this verification. Exemplarily, the identifier of the verification may be node identifiers or node information of the involved first node, second node, third node, and fourth node, verification initiation time, verification completion time, or other information that may uniquely represent the verification.

In some embodiments, the third node may also create a new block in the blockchain network, that is, the third node may implement a "block generation" function of the blockchain, and the new block is used to record information generated during the verification. Exemplarily, the third node may create the new block when sending the verification initiation instruction, or the third node may also initiate the new block before sending the verification initiation instruction, which is not limited in the present disclosure.

It should be noted that for each verification of network coverage information, the third node during the verification may create a new block to record information generated during this verification of network coverage information.

In some embodiments, the information generated during the verification includes at least one of: an identifier of the verification, a verification result, verification completion time, an identifier of the first node, an identifier of the second node, an identifier of the fourth node, position information of the fourth node, the number of fourth nodes that meet a verification requirement, and a measurement parameter obtained by measuring a beacon signal of the second node.

Exemplarily, the above-mentioned verification result may include a successful verification of the network coverage information of the second node or a failed verification of the network coverage information of the second node. The fourth node that meets the verification requirement may be a fourth node in the neighbour relation list of the second node.

The above mainly introduces the solutions provided in the present disclosure from the perspective of interaction among various nodes. It can be understood that in order to implement the above-mentioned functions, various node, for example, the first node, the second node, the third node or the fourth node, contain the corresponding hardware structures and/or software modules for performing the respective functions. Those skilled in the art should easily realize that, in conjunction with the algorithmic steps of each example described in the embodiments disclosed herein, the present disclosure may be implemented in the form of hardware or a combination of hardware and computer software. Whether a certain function is performed by hardware or computer software driving hardware, depends on the specific applications and design constraints of the technical solutions. Professionals may use different methods for each specific application to implement the described function, but such an implementation should not be regarded as beyond the scope of the present disclosure.

FIG. 7 shows a schematic diagram of components of a communication apparatus provided in the embodiments of the present disclosure. As shown in FIG. 7, the communication apparatus 70 is applied to a first node, and includes a sending unit 701 and a receiving unit 702. In some embodiments, the communication apparatus 70 also includes a processing unit 703.

In some embodiments, the sending unit 701 is configured to send a verification request to a second node in the communication system; where the verification request is used to request a verification of whether network coverage information of the second node is valid. The receiving unit 702 is configured to receive verification information of the second node sent from a fourth node. The sending unit 701 is further configured to send the verification information to a third node.

In some embodiments, the verification request includes at least one of an identifier of the first node, a digital digest of a public key of the first node, and a digital digest of the verification request.

In some embodiments, the verification request is encrypted by a public key of the first node and/or a public key of the second node.

In some embodiments, the verification information includes a measurement parameter, obtained by measuring a beacon signal sent from the second node.

In some embodiments, the measurement parameter includes at least one of: reference signal receiving power (RSRP), received signal strength indicator (RSSI), signal to interference plus noise ratio (SINR), throughput, and quality of experience (QoE).

In some embodiments, the verification information further includes at least one of an identifier of the fourth node, position information of the fourth node, and a digital digest of the verification information.

In some embodiments, the verification information is encrypted by a public key of the first node.

In some embodiments, the receiving unit 702 may be configured to receive the verification information of the second node sent from the fourth node, in a peer-to-peer (P2P) transmission mode.

In some embodiments, the second node includes a communication node to be verified, a communication node with a failed verification and a communication node with a successful verification, in the communication system.

In some embodiments, the receiving unit 702 is further configured to acquire verification priority of each communication node among the communication node to be verified, the communication node with the failed verification and the communication node with the successful verification. The processing unit 703 is configured to determine the second node according to the verification priority of each communication node.

In some embodiments, the verification priority of the communication node to be verified is higher than that of the communication node with the failed verification, and the verification priority of the communication node with the failed verification is higher than that of the communication node with the successful verification.

In some embodiments, the verification priority of the communication node with the successful verification is positively proportional to interval time since a last successful verification of the communication node.

In some embodiments, the receiving unit 702 is further configured to receive a verification initiation instruction sent from the third node; where the verification initiation instruction is used to indicate the first node to send the verification request.

In some embodiments, the first node is a communication node with trusted network coverage information determined by the third node.

In some embodiments, the processing unit 703 is further configured to decrypt verification information sent from at least one fourth node, by a private key of the first node, and package the verification information sent from the at least one fourth node that has been decrypted, and the private key of the first node, to obtain a first data packet. The sending unit 701 may be configured to send the first data packet to the third node.

For more detailed descriptions of the above-mentioned sending unit 701, receiving unit 702 and processing unit 703, as well as more detailed descriptions of their technical features and descriptions of beneficial effects, etc., reference may be made to the corresponding method embodiment sections mentioned above, which will not be repeated here.

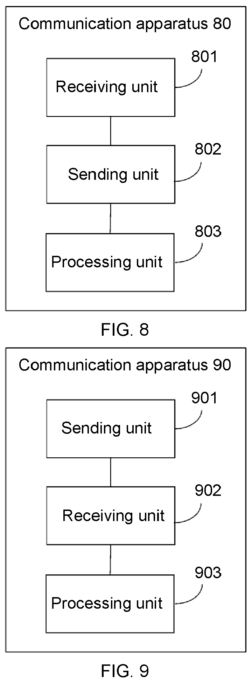

FIG. 8 shows a schematic diagram of components of a communication apparatus provided in the embodiments of the present disclosure. As shown in FIG. 8, the communication apparatus 80 is applied to a second node, and includes a receiving unit 801 and a sending unit 802. In some embodiments, the communication apparatus 80 also includes a processing unit 803.

In some embodiments, the receiving unit 801 is configured to receive a verification request sent from a first node; where the verification request is used to request a verification of whether network coverage information of the second node is valid. The sending unit 802 is configured to send a beacon signal to a fourth node, in response to the verification request.

In some embodiments, the processing unit 803 is configured to decrypt the verification request by a private key of the second node.

In some embodiments, the verification request includes at least one of an identifier of the first node, a digital digest of a public key of the first node, and a digital digest of the verification request.

In some embodiments, the receiving unit 801 is further configured to acquire an incentive reward for the verification based on an incentive proportion in response to the network coverage information of the second node being valid.

For more detailed descriptions of the above-mentioned receiving unit 801, sending unit 802 and processing unit 803, as well as more detailed descriptions of their technical features and descriptions of beneficial effects, etc., reference may be made to the corresponding method embodiment sections mentioned above, which will not be repeated here.

FIG. 9 shows a schematic diagram of components of a communication apparatus provided in the embodiments of the present disclosure. As shown in FIG. 9, the communication apparatus 90 is applied to a third node, and includes a sending unit 901 and a receiving unit 902 and a processing unit 903.

In some embodiments, the sending unit 901 is configured to send a verification initiation instruction to a first node; where the verification initiation instruction is used to indicate the first node to send a verification request, and the verification request is used to request a verification of whether network coverage information of a second node is valid. The receiving Unit 902 is configured to receive verification information sent from the first node. The processing unit 903 is configured to determine whether the network coverage information of the second node is valid, according to the verification information.

In some embodiments, the processing unit 903 is further configured to determine the first node among communication nodes with trusted network coverage information in the communication system.

In some embodiments, the receiving unit 902 may be configured to: receive a first data packet, where the first data packet includes the verification information and a private key of the first node.

In some embodiments, the processing unit 903 is further configured to decrypt the verification information by the private key of the first node.

In some embodiments, the processing unit 903 is further configured to determine that the network coverage information of the second node is valid, in response to the verification information meeting a preset condition.

In some embodiments, the processing unit 903 is further configured to determine the second node as a communication node with a successful verification.

In some embodiments, the verification information includes a measurement parameter, obtained by measuring a beacon signal of the second node by a fourth node.

In some embodiments, the preset condition is determined based on a network coverage quality parameter and/or a network coverage range parameter; where the network coverage quality parameter includes a distance parameter between the second node and a fourth node, and a measurement parameter obtained by measuring a beacon signal of the second node by a fourth node; and the network coverage range parameter includes a number of fourth nodes belonging to a target cell in neighbours of the second node.

In some embodiments, the measurement parameter includes at least one of: RSRP, RSSI, SINR, throughput, and QoE.

In some embodiments, the processing unit 903 is further configured to create a new block in a blockchain network, where the new block is used to record information generated during the verification.

In some embodiments, the processing unit 903 is further configured to record a verification result for the second node in the new block.

In some embodiments, the information generated during the verification includes at least one of: an identifier of the verification, the verification result, verification completion time, an identifier of the first node, an identifier of the second node, an identifier of a fourth node, position information of a fourth node, a number of fourth nodes that meet a verification requirement, and a measurement parameter obtained by measuring a beacon signal of the second node.

For more detailed descriptions of the above-mentioned sending unit 901, receiving unit 902 and processing unit 903, as well as more detailed descriptions of their technical features and descriptions of beneficial effects, etc., reference may be made to the corresponding method embodiment sections mentioned above, which will not be repeated here.

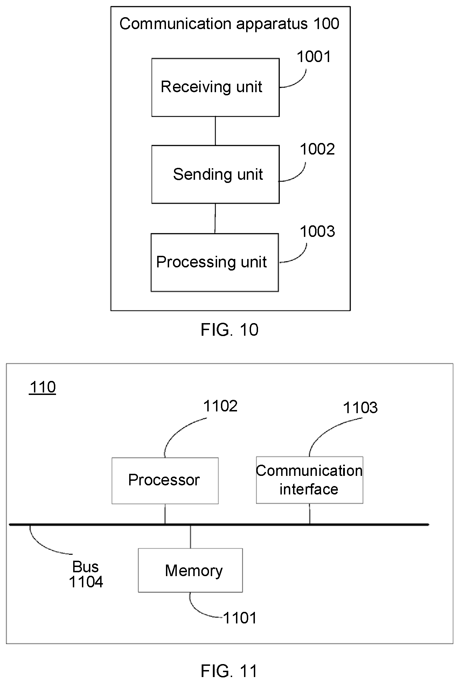

FIG. 10 shows a schematic diagram of components of a communication apparatus provided in the embodiments of the present disclosure. As shown in FIG. 10, the communication apparatus 100 is applied to a fourth node, and includes a receiving unit 1001 and a sending unit 1002. In some embodiments, the communication apparatus 100 also includes a processing unit 1003.

In some embodiments, the receiving unit 1001 is configured to receive a beacon signal sent from a second node. The send unit 1002 is configured to send verification information to a first node based on the beacon signal; where the verification information includes a measurement parameter of the beacon signal.

In some embodiments, the measurement parameter of the beacon signal includes one or more of: reference signal receiving power (RSRP), received signal strength indicator (RSSI), signal to interference plus noise ratio (SINR), obtained by measuring the beacon signal.

In some embodiments, the verification information further includes at least one of an identifier of the fourth node, position information of the fourth node, and a digital digest of the verification information.

In some embodiments, the receiving unit 1001 is further configured to receive a public key of the first node sent from the first node.

In some embodiments, the processing unit 1003 is configured to encrypt the verification information by the public key of the first node.

For more detailed descriptions of the above-mentioned receiving unit 1001, sending unit 1002 and processing unit 1003, as well as more detailed descriptions of their technical features and descriptions of beneficial effects, etc., reference may be made to the corresponding method embodiment sections mentioned above, which will not be repeated here.

It should be noted that the units in FIG. 7 to FIG. 10 may also be referred to as modules, and for example, the sending unit may be referred to as a sending module. In addition, in the embodiments shown in FIG. 7 to FIG. 10, the names of each unit may not be the names shown in the figures, and for example, the sending unit may also be referred to as a communication unit, and the receiving unit may also be referred to as a communication unit.

If each unit in FIG. 7 to FIG. 10 is implemented in the form of a software functional module, and sold or used as a separate product, the unit may be stored in a computer-readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of media capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus, and the communication apparatus may be the communication apparatus 70, communication apparatus 80, communication apparatus 90 or communication apparatus 100 mentioned above. As shown in FIG. 11, the communication apparatus 110 includes: a processor 1102, a communication interface 1103, and a bus 1104. In some embodiments, the communication apparatus 110 may also include a memory 1101.

The processor 1102 may implement or execute various illustrative logical blocks, modules and circuits described in conjunction with the contents of the present disclosure. The processor 1102 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the disclosed contents of the present disclosure. The processor 1102 may also be a combination capable of implementing computing functions, for example, including a combination of one or more microprocessors, or a combination of a digital signal processor (DSP) and a microprocessor.

The communication interface 1103 is configured to connect with other devices through a communication network. The communication network may be an Ethernet, a radio access network, a wireless local area network (WLAN), or the like.

The memory 1101 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As a possible implementation, the memory 1101 may exist independently of the processor 1102, and the memory 1101 may be connected to the processor 1102 through the bus 1104, for storing instructions or program codes. When calling and executing the instructions or the program codes stored in the memory 1101, the processor 1102 is capable of implementing the methods provided in the embodiments of the present disclosure.

In another possible implementation, the memory 1101 may also be integrated with the processor 1102.

The bus 1104 may be an extended industry standard architecture (EISA) bus or the like. The bus 1104 may be classified into an address bus, a data bus, and a control bus, or the like. For the convenience of representation, only one thick line is used in FIG. 11 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer-readable storage medium ( e.g., a non-transitory computer readable storage medium). All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer-readable storage medium may be a memory of the device or apparatus of any one of the aforementioned embodiments. The above-mentioned computer-readable storage medium may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer-readable storage medium mentioned above may further include both an internal storage unit and an external storage device of the device or apparatus mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output.

The embodiments of the present disclosure further provide a computer program product, the computer product contains a computer program, the computer program product, when executed on a computer, causes the computer to perform any one of the methods provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, and it is obvious that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

## Claims

1. A network coverage verification method, **characterized in that** the method is applied to a first node in a communication system, and the method comprises:
sending a verification request to a second node in the communication system; wherein the verification request is used to request a verification of whether network coverage information of the second node is valid;
receiving verification information of the second node sent from a fourth node; and
sending the verification information to a third node.

2. The method according to claim 1, wherein the verification request comprises at least one of an identifier of the first node, a digital digest of a public key of the first node, and a digital digest of the verification request.

3. The method according to claim 1, wherein the verification request is encrypted by a public key of the first node and/or a public key of the second node.

4. The method according to claim 1, wherein the verification information comprises a measurement parameter, obtained by measuring a beacon signal sent from the second node.

5. The method according to claim 4, wherein the measurement parameter comprises at least one of:
reference signal receiving power (RSRP), received signal strength indicator (RSSI), signal to interference plus noise ratio (SINR), throughput, and quality of experience (QoE).

6. The method according to claim 4, wherein the verification information further comprises at least one of an identifier of the fourth node, position information of the fourth node, and a digital digest of the verification information.

7. The method according to claim 1, wherein the verification information is encrypted by a public key of the first node.

8. The method according to claim 1, wherein receiving the verification information of the second node sent from the fourth node, comprises:
receiving the verification information of the second node sent from the fourth node, in a peer-to-peer (P2P) transmission mode.

9. The method according to claim 1, wherein the second node comprises a communication node to be verified, a communication node with a failed verification and a communication node with a successful verification, in the communication system.

10. The method according to claim 9, further comprising:
acquiring verification priority of each communication node among the communication node to be verified, the communication node with the failed verification and the communication node with the successful verification; and
determining the second node according to the verification priority of each communication node.

11. The method according to claim 10, wherein the verification priority of the communication node to be verified is higher than the verification priority of the communication node with the failed verification, and the verification priority of the communication node with the failed verification is higher than the verification priority of the communication node with the successful verification.

12. The method according to claim 10, wherein the verification priority of the communication node with the successful verification is positively proportional to interval time since a last successful verification of the communication node.

13. The method according to claim 1, further comprising:
receiving a verification initiation instruction sent from the third node; wherein the verification initiation instruction is used to indicate the first node to send the verification request.

14. The method according to claim 13, wherein the first node is a communication node with trusted network coverage information determined by the third node.

15. The method according to claim 1, wherein sending the verification information to the third node, comprises:
decrypting verification information sent from at least one fourth node, by a private key of the first node;
packaging the verification information sent from the at least one fourth node that has been decrypted, and the private key of the first node, to obtain a first data packet; and
sending the first data packet to the third node.

16. A network coverage verification method, **characterized in that** the method is applied to a third node in a communication system, and the method comprises:
sending a verification initiation instruction to a first node; wherein the verification initiation instruction is used to indicate the first node to send a verification request, and the verification request is used to request a verification of whether network coverage information of a second node is valid;
receiving verification information sent from the first node; and
determining whether the network coverage information of the second node is valid, according to the verification information.

17. The method according to claim 16, further comprising:
determining the first node among communication nodes with trusted network coverage information in the communication system.

18. The method according to claim 16, wherein receiving the verification information sent from the first node, comprises:
receiving a first data packet, wherein the first data packet comprises the verification information and a private key of the first node.

19. The method according to claim 18, further comprising:
decrypting the verification information by the private key of the first node.

20. The method according to claim 16, wherein determining whether the network coverage information of the second node is valid, according to the verification information, comprises:
in response to the verification information meeting a preset condition, determining that the network coverage information of the second node is valid.

21. The method according to claim 20, further comprising:
determining the second node as a communication node with a successful verification.

22. The method according to claim 20, wherein the verification information comprises a measurement parameter, obtained by measuring a beacon signal of the second node by a fourth node.

23. The method according to claim 20, wherein the preset condition is determined based on a network coverage quality parameter and/or a network coverage range parameter;
wherein the network coverage quality parameter comprises a distance parameter between the second node and a fourth node, and a measurement parameter obtained by measuring a beacon signal of the second node by a fourth node; and the network coverage range parameter comprises a number of fourth nodes belonging to a target cell in neighbours of the second node.

24. The method according to claim 23, wherein the measurement parameter comprises at least one of:
reference signal receiving power (RSRP), received signal strength indicator (RSSI), signal to interference plus noise ratio (SINR), throughput, and quality of experience (QoE).

25. The method according to claim 20, further comprising:
creating a new block in a blockchain network, wherein the new block is used to record information generated during the verification.

26. The method according to claim 25, further comprising:
recording a verification result for the second node in the new block.

27. The method according to claim 26, wherein the information generated during the verification comprises at least one of: an identifier of the verification, the verification result, verification completion time, an identifier of the first node, an identifier of the second node, an identifier of a fourth node, position information of a fourth node, a number of fourth nodes that meet a verification requirement, and a measurement parameter obtained by measuring a beacon signal of the second node.

28. A network coverage verification method, **characterized in that** the method is applied to a second node in a communication system, and the method comprises:
receiving a verification request sent from a first node; wherein the verification request is used to request a verification of whether network coverage information of the second node is valid; and
sending a beacon signal to a fourth node, in response to the verification request.

29. The method according to claim 28, further comprising:
decrypting the verification request by a private key of the second node.

30. The method according to claim 29, wherein the verification request comprises at least one of an identifier of the first node, a digital digest of a public key of the first node, and a digital digest of the verification request.

31. The method according to claim 28, further comprising:
in response to the network coverage information of the second node being valid, acquiring an incentive reward for the verification based on an incentive proportion.

32. A network coverage verification method, **characterized in that** the method is applied to a fourth node in a communication system, and the method comprises:
receiving a beacon signal sent from a second node; and
sending verification information to a first node based on the beacon signal; wherein the verification information comprises a measurement parameter of the beacon signal.

33. The method according to claim 32, wherein the measurement parameter of the beacon signal comprises one or more of: reference signal receiving power (RSRP), received signal strength indicator (RSSI), signal to interference plus noise ratio (SINR), obtained by measuring the beacon signal.

34. The method according to claim 32, wherein the verification information further comprises at least one of an identifier of the fourth node, position information of the fourth node, and a digital digest of the verification information.

35. The method according to claim 32, further comprising:
receiving a public key of the first node sent from the first node.

36. The method according to claim 35, further comprising:
encrypting the verification information by the public key of the first node.

37. A communication apparatus, **characterized by** comprising: a memory and a processor; wherein the memory is coupled with the processor; the memory is configured to store instructions executable by the processor; and the processor, when executing the instructions, performs the method according to any one of claims 1 to 36.

38. A computer-readable storage medium, **characterized in that** the computer-readable storage medium has stored computer instructions, and when the computer instructions run on a communication apparatus, the communication apparatus performs the method according to any one of claims 1 to 36.
